# EUROPEAN PATENT APPLICATION

(11) **EP 3 197 000 A1**
(43) Date of publication of application: **26.07.2017**
(21) Application number: 15834574.4
(22) Date of filing: 24.07.2015
(51) Int. Cl.: H02J 3/32, G06Q 50/06, H02J 3/00, H02J 3/46

(54) **MANAGEMENT DEVICE, MANAGEMENT METHOD, AND PROGRAM**

(30) Priority: 22.08.2014 JP 2014169100
(71) Applicant: NEC Corporation, Tokyo 108-8001 (JP)
(72) Inventor: MURAKAMI Togo, Tokyo 108-8001 (JP); HAMADA Tatsushi, Tokyo 108-8001 (JP); KOBAYASHI Takashi, Tokyo 108-8001 (JP); SATOU Tsuyoshi, Tokyo 108-8001 (JP)
(74) Representative: Vossius & Partner Patentanwälte Rechtsanwälte mbB
(86) International application number: PCT/JP2015/071092
(87) International publication number: WO 2016/027618

(57) **Abstract**

Provided is a management device (10) including a schedule acquisition unit (11) that acquires a power generation schedule in a first power generation unit which shows output power according to time, a change information acquisition unit (12) that acquires change information indicating change details of necessary output power in the first power generation unit, a storage battery information acquisition unit (13) that acquires storage battery information indicating free capacities of a plurality of storage batteries in a case where the change information acquisition unit (12) acquires the change information, and a correction unit (14) that corrects the power generation schedule on the basis of the change information and the storage battery information.

## Description

### TECHNICAL FIELD

The present invention relates to a management device, a management method, and a program.

### BACKGROUND ART

In recent years, power generation has been performed using natural energy such as solar energy or wind power. In a case of power generation using such natural energy, the output thereof depends on the weather or the like, and thus there is a problem of poor output controllability. Consequently, it is considered that power generation using such natural energy and a first power generation unit (for example, thermal power generation or the like) which has good output controllability are used together for the stable supply of power.

In this manner, in a case where the power generation using such natural energy and the first power generation unit are used together, a power generation schedule (generated power according to time in a unit period (for example, one day or half a day)) in the first power generation unit can be determined, for example, as follows. First, necessary output power (necessary power according to time in a unit period) in the first power generation unit is calculated on the basis of a power generation prediction (a power generation prediction according to time in a unit period) in power generation using natural energy and a consumption prediction (a power consumption prediction according to time in a unit period). The necessary output power according to time is assumed to be a power generation schedule in the first power generation unit.

Incidentally, the power generation schedule in the first power generation unit can be previously generated for each predetermined unit period. For example, the power generation schedule is generated before a predetermined time of the previous day in units of one day. In this case, the power generation schedule is generated on the basis of a power generation prediction or a consumption prediction (collectively referred to as an "initial prediction") of the day which are predicted before a predetermined time of the previous day. In this case, divergence may occur between the initial prediction and an actual result of generated power of natural energy or an actual result of power consumption of the day. In a case where such divergence occurs, it is necessary to change the power generation schedule in the first power generation unit on that day.

A technique related to the invention is disclosed in Patent Documents 1 to 3.
Patent Document 1 discloses a control device for reducing a power generation loss. The control device includes a prediction unit that computationally calculates a prediction value of the amount of power to be used in each of a plurality of user sites and adds up the prediction values throughout the plurality of user sites to thereby set the value obtained by the adding-up to be a total prediction value, a supplied power acquisition unit that acquires an estimated amount of power which is actually supplied to the plurality of user sites, and an instruction transmission unit that transmits information for discharging a power storage device in a stringency period in which a difference between the amount of power acquired by the supplied power acquisition unit and the total prediction value becomes smaller than a predetermined threshold value, to a user site including a power storage device which is charged by private power generation, among the plurality of user sites.
Patent Document 2 discloses a supply and demand balance control device for realizing supply and demand control that does not require a large-sized power storage device. The supply and demand balance control device calculates a predicted amount of power demand required for each consumer in a predetermined period of time. A confidence value for the calculated predicted amount of power demand is calculated for each consumer. In addition, the supply and demand balance control device calculates a predicted amount of power supply, which is predicted to be supplied from a power system in a predetermined period of time, for each power generation unit. A confidence value for the calculated predicted amount of power supply is calculated for each power generation unit. Thereafter, the supply and demand balance control device obtains a supply and demand margin level on the basis of a difference between a first weighted sum obtained by performing weighted sum on the predicted amount of power demand and a weight according to the confidence value and a second weighted sum obtained by performing weighted sum on the predicted amount of power supply and a weight according to the confidence value. The power use control of controllable demand equipment of a consumer in a predetermined period of time is planned on the basis of the supply and demand margin level.
Patent Document 3 discloses a power demand management device for keeping the voltage of a low-voltage distribution line within a reference value even in a time slot at which surplus power is generated from an ordinary household, by using power generation of a home distribution power supply such as a solar panel. The power demand management device includes a surplus power prediction unit that acquires surplus power information regarding surplus power in the past which is generated from a plurality of facilities and predicts surplus power on the basis of the acquired surplus power information, and a transmission unit that transmits power storage request information including a power storage request amount and a power storage request time to a facility on the basis of the predicted surplus power.

### RELATED DOCUMENT

### PATENT DOCUMENT

[Patent Document 1] Japanese Patent Application Laid-open Publication No. 2012-95455
[Patent Document 2] Japanese Patent Application Laid-open Publication No. 2012-60789
[Patent Document 3] Japanese Patent Application Laid-open Publication No. 2011-211820

### SUMMARY OF THE INVENTION

### TECHNICAL PROBLEM

In a case where divergence occurs between an initial prediction and an actual result of power generation of natural energy or an actual result of a power consumption of the day, a power generation schedule is corrected on the basis of a new prediction (a power generation prediction, a consumption prediction), but there is a possibility that divergence further occurs between the new prediction and the actual result under an unstable state.

In addition, there is a limit to output adjustment of a power generation facility (a rate of change in output or the like), and thus it is not possible to suddenly change an output value. Thus, in order to realize the stable supply of power, it is preferable that output power in a first power generation unit is increased from that in the initial schedule at as early a timing as possible and is made to reach necessary output power at each timing as beforehand as possible.

However, in a case where divergence, such as a great excess of the amount of power generation, occurs between an actual result of the amount of power generation based on the new prediction and an actual result of the amount of consumption at that point in time, a great amount of surplus power is generated. It is necessary to discard generated surplus power in order to balance between the supply and demand of power, and thus there is a problem of a deterioration in power generation efficiency.

An object of the invention is to provide a management device, a management method, and a program for solving the above-described problems.

### SOLUTION TO PROBLEM

According to the invention, there is provided a management device including a schedule acquisition unit that acquires a power generation schedule in a first power generation unit which shows output power according to time, a change information acquisition unit that acquires change information indicating change details of necessary output power in the first power generation unit, a storage battery information acquisition unit that acquires storage battery information indicating free capacities of a plurality of storage batteries when the change information acquisition unit acquires the change information, and a correction unit that corrects the power generation schedule on the basis of the change information and the storage battery information.

In addition, according to the invention, there is provided a management method performed by a computer, the method including a schedule acquisition step of acquiring a power generation schedule in a first power generation unit which shows output power according to time, a change information acquisition step of acquiring change information indicating change details of necessary output power in the first power generation unit, a storage battery information acquisition step of acquiring storage battery information indicating free capacities of a plurality of storage batteries in a case where the change information is acquired by the change information acquisition step, and a correction step of correcting the power generation schedule on the basis of the change information and the storage battery information.

In addition, according to the invention, there is provided a program causing a computer to function as a schedule acquisition unit that acquires a power generation schedule in a first power generation unit which shows output power according to time, a change information acquisition unit that acquires change information indicating change details of necessary output power in the first power generation unit, a storage battery information acquisition unit that acquires storage battery information indicating free capacities of a plurality of storage batteries when the change information acquisition unit acquires the change information, and a correction unit that corrects the power generation schedule on the basis of the change information and the storage battery information.

### ADVANTAGEOUS EFFECTS OF INVENTION

According to the invention, a management device, a management method, and a program with high power generation efficiency are realized.

### BRIEF DESCRIPTION OF THE DRAWINGS

The above-described objects, other objects, features and advantages will be further apparent from the preferred exemplary embodiments described below, and the accompanying drawings as follows.

FIG. 1 is a schematic diagram illustrating an example of a hardware configuration of a device according to the present exemplary embodiment.
FIG. 2 is a diagram illustrating an example of a functional block diagram of a management device according to the present exemplary embodiment.
FIG. 3 is a schematic diagram illustrating an example of a power generation schedule according to the present exemplary embodiment.
FIG. 4 is a schematic diagram illustrating an example of power generation prediction according to the present exemplary embodiment.
FIG. 5 is a schematic diagram illustrating an example of consumption prediction according to the present exemplary embodiment.
FIG. 6 is a schematic diagram illustrating an example of a power generation schedule and change information according to the present exemplary embodiment.
FIG. 7 is a conceptual diagram illustrating an example of an operational example of the management device according to the present exemplary embodiment.
FIG. 8 is a conceptual diagram illustrating an example of an operational example of the management device according to the present exemplary embodiment.
FIG. 9 is a diagram illustrating an example of a functional block diagram of the management device according to the present exemplary embodiment.
FIG. 10 is a flow chart illustrating an example of a flow of processing of a management device 10 according to the present exemplary embodiment.
FIG. 11 is a diagram illustrating an example of a functional block diagram of a management device according to the present exemplary embodiment.
FIG. 12 is a schematic diagram illustrating an example of a process of correcting a power generation schedule according to the present exemplary embodiment.
FIG. 13 is a schematic diagram illustrating an example of a process of correcting a power generation schedule according to the present exemplary embodiment.
FIG. 14 is a schematic diagram illustrating an example of a process of correcting a power generation schedule according to the present exemplary embodiment.

### DESCRIPTION OF EXEMPLARY EMBODIMENTS

First, an example of a hardware configuration of a device according to the present exemplary embodiment will be described. Each unit included in the device according to the present exemplary embodiment is implemented by any combination of hardware and software based on a Central Processing Unit (CPU), a memory, a program (including a program stored in advance in the memory from the stage of shipping of an apparatus, and a program downloaded from a storage medium such as a Compact Disc (CD), a server on the Internet, or the like) which is loaded on the memory, a storage unit such as a hard disk storing the program, and an interface for network connection, which are of any computer. In addition, those skilled in the art understand that various modifications can be made to the implementation method thereof and the apparatus.

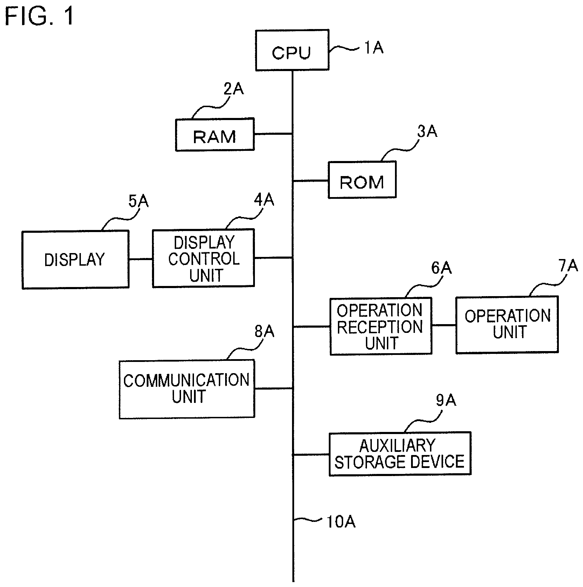

FIG. 1 is a schematic diagram illustrating an example of a hardware configuration of a device according to the present exemplary embodiment. As illustrated in the drawing, the device according to the present exemplary embodiment includes, for example, a CPU 1A, a random access memory (RAM) 2A, a read only memory (ROM) 3A, a display control unit 4A, a display 5A, an operation reception unit 6A, an operation unit 7A, a communication unit 8A, an auxiliary storage device 9A, and the like which are connected to each other by a bus 10A. It should be noted that, although not shown in the drawing, the device may include other components, such as an input and output interface, a microphone, and a speaker, which are connected to an external device in a wired manner.

The CPU 1A controls the overall computer of the device together with the components. The ROM 3A includes an area in which programs and various application programs for operating the computer, various pieces of setting data used when the programs operate, and the like are stored. The RAM 2A includes an area, such as a work area for operating programs, in which data is temporarily stored. The auxiliary storage device 9A is, for example, a hard disc drive (HDD), and can store large-capacity data.

The display 5A is, for example, a display device (a light emitting diode (LED) display, a liquid crystal display, an organic electro luminescence (EL) display, or the like). The display 5A may be a touch panel display which is integrated with a touch pad. The display control unit 4A reads out data stored in a video RAM (VRAM), performs predetermined processing on the read-out data, and then transmits the processed data to the display 5A to thereby perform various screen displays. The operation reception unit 6A receives various operations through the operation unit 7A. The operation unit 7A includes an operation key, an operation button, a switch, a jog dial, a touch panel display, a keyboard, and the like. The communication unit 8A is connected to a network, such as the Internet or a local area network (LAN), in a wired and/or wireless manner to communicate with another electronic equipment item.

Hereinafter, the present exemplary embodiment will be described. It should be noted that, functional block diagrams used in describing the present exemplary embodiment show function-based blocks rather than hardware-based configurations. In the functional block diagrams, although a description is given such that each device is implemented by one apparatus, the implement means thereof is not limited thereto. In other words, each device may be configured to be physically or logically separated. It should be noted that, the same components are denoted by the same reference numerals and signs, and a description thereof will not be repeated.

### <First Exemplary Embodiment>

A management device according to the present exemplary embodiment includes a new configuration for correcting a power generation schedule in a first power generation unit in a case where necessary output power in the first power generation unit with good output controllability changes.

Specifically, when the management device acquires change information indicating change details of necessary output power in the first power generation unit in a predetermined period of time after the power generation schedule in the predetermined period of time of the first power generation unit is generated, the management device acquires storage battery information indicating free capacities of a plurality of storage batteries. The power generation schedule of the first power generation unit is corrected on the basis of the change information and the storage battery information.

For example, in a case where the amount of power generation of the first power generation unit is required to be increased from that in the initial schedule and a free capacity of a storage battery is equal to or greater than a predetermined value, the management device corrects the power generation schedule so that output power in the first power generation unit is increased from that in the initial schedule at as early a timing as possible and is made to reach necessary output power at each timing as beforehand as possible. Thereby, it is possible to realize the stable supply of power. It should be noted that, in this case, a great amount of surplus power may be generated, but a storage battery having a free capacity being equal to or greater than a predetermined value can be charged with the surplus power. Thus, it is possible to avoid inconvenience in which surplus power is discarded.

According to the management device according to the present exemplary embodiment, for example, in power generation in which a first power generation unit with good output controllability and a second power generation unit with poor output controllability are used together, in a case where necessary output power in the first power generation unit changes because a power generation prediction of the second power generation unit is changed from an initial prediction, or a consumption prediction is changed from the initial prediction, it is possible to appropriately correct a power generation schedule in the first power generation unit. It should be noted that, the first power generation unit and a storage battery are electrically connected to each other through a system (power distribution network), and the output power of the first power generation unit is supplied to the storage battery.

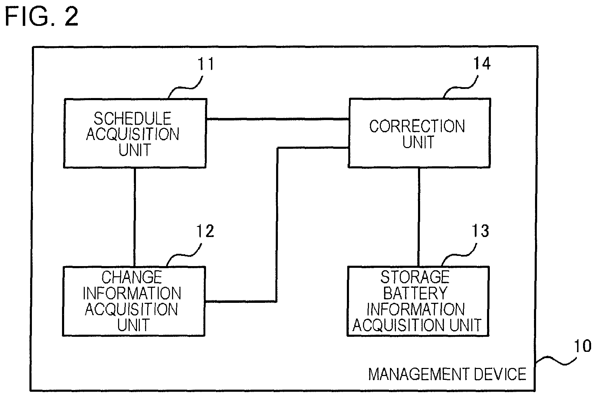

FIG. 2 illustrates an example of a functional block diagram of a management device 10 according to the present exemplary embodiment. As illustrated in the drawing, the management device 10 includes a schedule acquisition unit 11, a change information acquisition unit 12, a storage battery information acquisition unit 13, and a correction unit 14.

The schedule acquisition unit 11 acquires a power generation schedule in a first power generation unit which shows output power according to time. The first power generation unit is a power generation unit with good output controllability and corresponds to, for example, thermal power generation or the like. The power generation schedule may be a power generation schedule showing the output power of one first power generation unit, or may be a power generation schedule showing a total output power of a plurality of first power generation units.

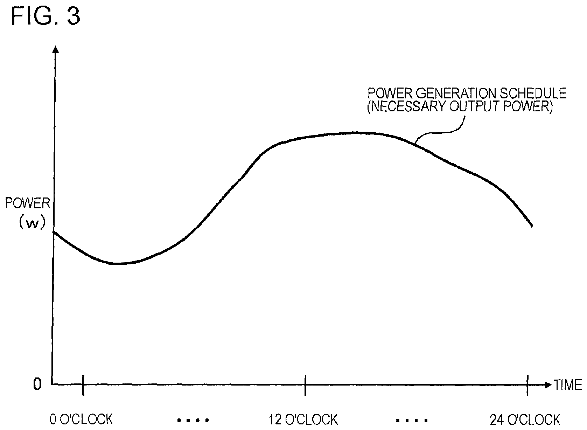

FIG. 3 schematically illustrates an example of a power generation schedule. In the example illustrated in the drawing, a power generation schedule (necessary output power) is shown in a graph in which the horizontal axis represents a time and the vertical axis represents a power. The power generation schedule is generated in advance (for example, before a predetermined time of the previous day) for each unit period (for example, one day or half a day).

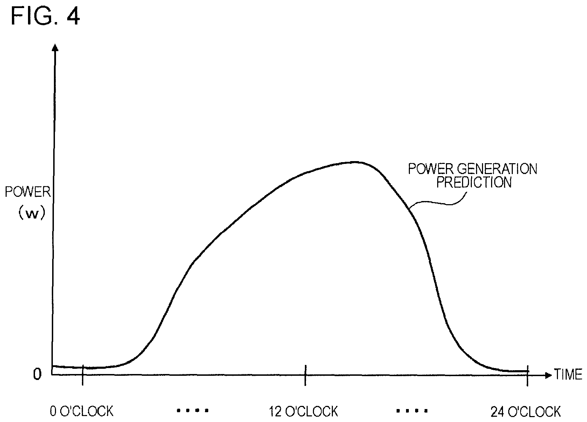

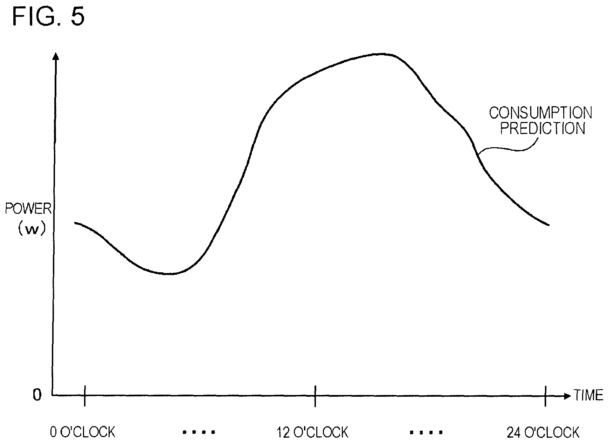

Hereinafter, an example of the generation of a power generation schedule will be described. For example, the power generation schedule is generated on the basis of a power generation prediction showing a predicted output power according to time of a second power generation unit with poor output controllability as illustrated in FIG. 4 and a consumption prediction showing a predicted power consumption according to time as illustrated in FIG. 5. The second power generation unit is a power generation unit using natural energy such as solar energy or wind power. For example, necessary output power in the first power generation unit is obtained by subtracting the power generation prediction of the second power generation unit from the consumption prediction. The necessary output power calculated in this manner is set to be a power generation schedule of the first power generation unit.

It should be noted that, a unit that generates a power generation prediction showing a predicted output power according to time of the second power generation unit is not particularly limited, and any technique can be used. For example, a power generation amount prediction may be generated using factors, such as a weather forecast, which may affect the amount of power generation or any algorithm using information, such as actual results in the past, which is associated with each factor. Similarly, a unit that generates a consumption prediction showing a predicted power consumption according to time is not particularly limited, and any technique can be used. For example, a consumption prediction may be generated using factors, such as a weather forecast, a temperature, and a humidity, which may affect the amount of power consumption or any algorithm using information, such as actual results in the past, which is associated with each factor.

The change information acquisition unit 12 acquires change information indicating change contents of necessary output power in the first power generation unit after the power generation schedule is generated. The change information may be information indicating necessary output power after change according to time. It should be noted that, the change information may be information indicating necessary output power according to time in a portion of a unit period (for example, one day or half a day) of the power generation schedule.

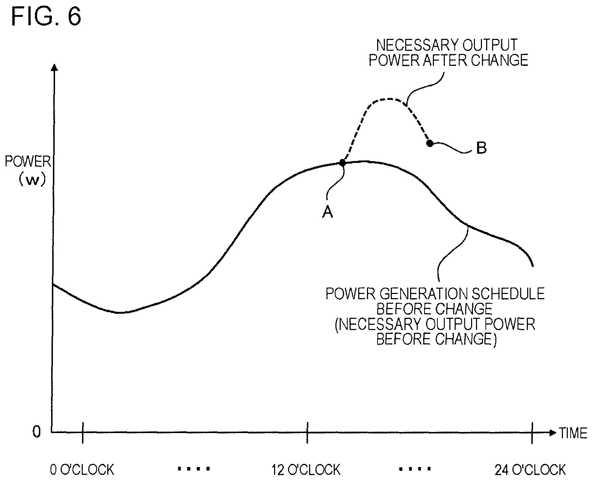

FIG. 6 illustrates an example in which change information acquired by the change information acquisition unit 12 is displayed so as to overlap a power generation schedule acquired by the schedule acquisition unit 11. The power generation schedule before change which is illustrated in the drawing is data corresponding to the power generation schedule illustrated in FIG. 3. In a case of the example illustrated in the drawing, necessary output power after change according to time is shown from a timing A to a timing B on the basis of the change information acquired by the change information acquisition unit 12.

Referring to FIG. 2, the storage battery information acquisition unit 13 acquires storage battery information indicating free capacities of a plurality of storage batteries in a case where the change information acquisition unit 12 acquires change information. The storage batteries may be storage batteries which are managed by consumers in ordinary households or companies in order to use the storage batteries by themselves.

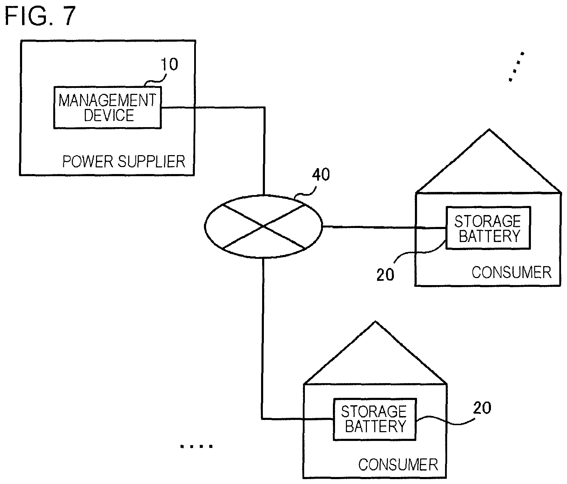

For example, a plurality of storage batteries are registered in the management device 10 in advance. For example, as illustrated in FIG. 7, the management device 10 and the plurality of registered storage batteries 20 are configured to communicable with each other through a network 40 such as the Internet. In a case where the change information acquisition unit 12 acquires change information, the management device 10 acquires information indicating free capacities from the plurality of storage batteries 20 in accordance with the change information. The free capacities of the plurality of storage batteries 20 are added up on the basis of these pieces of information, and thus the storage battery information acquisition unit 13 acquires storage battery information indicating the free capacities of the plurality of storage batteries 20.

As another example, the management device 10 may acquire information indicating free capacities from the plurality of storage batteries 20 for each predetermined timing regardless of whether or not change information is acquired by the change information acquisition unit 12, and may manage the acquired information. When the change information acquisition unit 12 acquires change information, the storage battery information acquisition unit 13 may accordingly obtain free capacities of the plurality of storage batteries 20 on the basis of latest information which is managed by the management device 10.

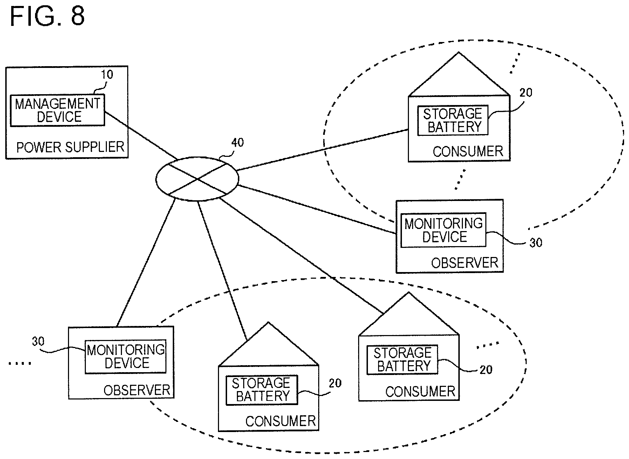

As another example, as illustrated in FIG. 8, the plurality of storage batteries 20 may be grouped, and monitoring devices 30 that monitors the state of the storage battery 20 for each group may be provided. The management device 10 may request information indicating a free capacity of the storage battery 20 from each of the monitoring devices 30 at a predetermined timing, and may acquire the information from the plurality of monitoring devices 30. The change information acquisition unit 12 may obtain free capacities of the plurality of storage batteries 20 on the basis of the information acquired from the plurality of monitoring device 30. The monitoring device 30 may request information indicating the free capacities from the plurality of storage batteries 20 in response to the request from the management device 10, and acquire the information. Alternatively, the monitoring device 30 may acquire information indicating the free capacities from the plurality of storage batteries 20 for each predetermined timing regardless of the presence or absence of the request described above from the management device 10, and manage the acquired information. When the request is acquired from the management device 10, the free capacities of the plurality of storage batteries 20 may be obtained on the basis of the latest information managed in accordance with the request and be returned to the management device 10.

The correction unit 14 corrects the power generation schedule acquired by the schedule acquisition unit 11 on the basis of the change information acquired by the change information acquisition unit 12 and the storage battery information acquired by the storage battery information acquisition unit 13.

For example, in a case where the amount of power generation of the first power generation unit is required to be increased from that in the initial schedule and a free capacity of the storage battery 20 is equal to or greater than a predetermined value, the correction unit 14 may correct the power generation schedule so that output power in the first power generation unit is increased from that in the initial schedule at as early a timing as possible and is made to reach necessary output power at each timing as beforehand as possible. Thereby, even when a situation in which the necessary output power after change changes so as to be further increased occurs, there is a higher possibility that the stable supply of power can be achieved. It should be noted that, in this case, a great amount of surplus power may be generated, but a storage battery 20 having a free capacity being equal to or greater than a predetermined value can be charged with the surplus power. Thus, it is possible to avoid inconvenience in which surplus power is discarded. It should be noted that, the predetermined value can be appropriately determined in consideration of, for example, a rate of change in output in the first power generation unit and a rate of increase in output power after change.

In order to achieve such correction, the correction unit 14 may determine a timing at which the power generation schedule is changed over to a corrected power generation schedule in accordance with the free capacities of the plurality of storage batteries 20.

In addition, in a case where Pr1 which is necessary output power at a first timing based on change information is larger than Pr0 which is output power at the first timing in the power generation schedule before change and the free capacities of the plurality of storage batteries based on storage battery information are equal to or greater than a predetermined value, the correction unit 14 may correct the power generation schedule so that output power is set to be equal to or greater than Pr1 a predetermined time t before the first timing. It should be noted that, the correction unit 14 may determine the predetermined time t in accordance with the free capacities of the plurality of storage batteries 20.

In addition, in a case where Pr1 is greater than Pr0 and the free capacities of the plurality of storage batteries 20 based on the storage battery information are smaller than the predetermined value, the correction unit 14 may correct the power generation schedule so that output power is set to be equal to or greater than Pr1 a predetermined time tₘ (0≤tₘ<t) before the first timing.

Hereinafter, correction performed by the correction unit 14 will be described in detail.

The correction unit 14 holds a maximum value of a rate of change in the amount of power generation (rate of change in output) which can be handled by the first power generation unit. When the correction unit 14 acquires information indicating necessary output power after change, the correction unit compares a rate of increase in power in the necessary output power after change and a maximum value of a rate of change in output with each other. In a case where a relationship of (a rate of increase in necessary output power after change) ≤ (a maximum value of a rate of change in output) is established in any time slot, it is possible to secure necessary power by the output adjustment of the first power generation unit. In this case, the correction unit 14 can adopt necessary output after change as a changed power generation schedule as it is.

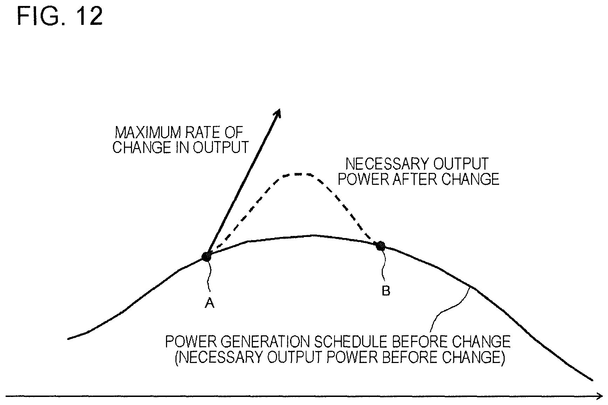

For example, it is assumed that a power generation schedule before change and necessary output power after change (from time A to time B) have a relationship as illustrated in FIG. 12. FIG. 12 illustrates a portion of the same graph as that of FIG. 6. In a case of the example of FIG. 12, a relationship of (a rate of increase in necessary output power after change)≤(a maximum value of a rate of change in output) is established in any time slot. Consequently, in a case of the example of FIG. 12, the correction unit 14 generates a power generation schedule adopting until the time A: a power generation schedule before change; from the time A to the time B: necessary output power after change; and before change on and after the time B: the power generation schedule.

On the other hand, in a case where a relationship of (a rate of increase in necessary output power after change) ≤ (a maximum value of a rate of change in output) is not established in any time slot, it is not possible to secure necessary power by the output adjustment of the first power generation unit in the time slot. In this case, the correction unit 14 corrects a power generation schedule on the basis of storage battery information acquired by the storage battery information acquisition unit 13.

For example, in a case where it is necessary to increase the amount of power generation from that in the power generation schedule before change and free capacities of a plurality of storage batteries based on storage battery information are smaller than a predetermined value, the correction unit 14 generates a corrected power generation schedule so that surplus power is not generated to the utmost and a relationship of (necessary output power after change)≤(a changed power generation schedule) is established in any time slot.

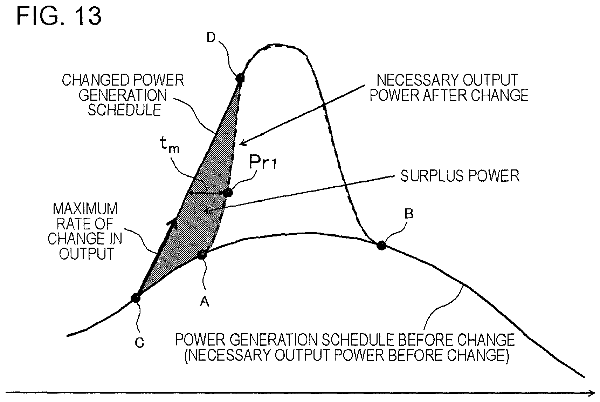

For example, it is assumed that a power generation schedule before change and necessary output power after change (from the time A to the time B) have a relationship as illustrated in FIG. 13. In a case of the example, a relationship of (a rate of increase in necessary output power after change) ≤ (a maximum value of a rate of change in output) is not established in a time slot from the time A to time D.

Referring to a changed power generation schedule in the example of FIG. 13, the correction unit 14 increases an output value at a maximum rate of change in output (a value slightly smaller than a maximum value may be used), and generates a changed schedule from time C to the time D so that output power is set to be necessary power at the time D when necessary power in a time slot in which a relationship of (a rate of increase in necessary output power after change)≤(a maximum value of a rate of change in output) is not established has a maximum value. The correction unit 14 can generate a power generation schedule before change until the time C, can generate a changed schedule which is determined as described above from the time C to the time D, can generate necessary output power after change from the time D to the time B, and can generate a power generation schedule adopting the power generation schedule before change after the time B. In this case, a filled portion illustrated in the drawing indicates surplus power. The time C is uniquely determined on the basis of the power generation schedule before change, the time D and necessary power at the time, and a maximum value of a rate of change in output.

On the other hand, in a case where it is necessary to increase the amount of power generation from that in the power generation schedule before change and the free capacities of the plurality of storage batteries based on storage battery information are equal to or greater than the predetermined value, the correction unit 14 corrects the power generation schedule so that output power in the first power generation unit is increased from that in the initial schedule at as early a timing as possible and is made to reach necessary output power at each timing in advance.

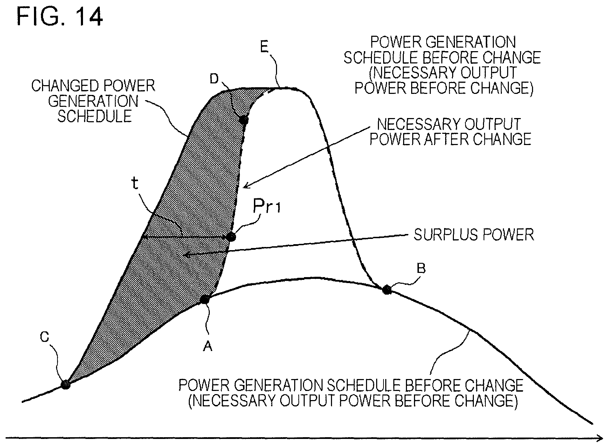

For example, it is assumed that the power generation schedule before change and the necessary output power after change (from the time A to the time B) have a relationship as illustrated in FIG. 14. In a case of the example, a relationship of (a rate of increase in necessary output power after change)≤(a maximum value of a rate of change in output) is not established in a time slot from time A to time D.

Referring to a changed power generation schedule in the example of FIG. 14, the correction unit 14 generates a changed schedule from the time C to time E (during a power peak) so that output power reaches Pr1, which is necessary output power after change at any timing (first timing), a predetermined time t or more before the timing. The correction unit 14 generates a power generation schedule adopting until the time C: a power generation schedule before change; from the time C to the time E: a changed schedule which is determined as described above; from the time E to the time B: necessary output power after change; and on or after the time B: the power generation schedule before change. In this case, a filled portion illustrated in the drawing indicates surplus power.

It should be noted that, the amount of increase in power between the time C and the time E, a timing (time C) at which a power generation schedule is changed over to a corrected power generation schedule, and the predetermined time t may be determined in accordance with a free capacity of a storage battery. For example, the larger the free capacity is, the longer the predetermined time t may be set to be by decreasing the amount of increase in power between the time C and the time E and advancing the timing (time C) at which the power generation schedule is changed over to the corrected power generation schedule. In this manner, the load of the first power generation unit can be reduced, which is preferable. In addition, the amount of increase in power between the time C and the time E may be constant, or may be changed so as to be gradually increased. In addition, the predetermined time t may be a different value for any timing.

Here, tm illustrated in FIG. 13 and t illustrated in FIG. 14 are compared with each other. Here, tm and t are values indicating how early output power reaches Pr1, which is necessary output power after change at any timing (first timing), from the timing. In a case of the present exemplary embodiment, as illustrated in FIGS. 13 and 14, a relationship of tm<t is established. It should be noted that, a relationship of tm=0 is established at the time D. In this manner, in a case of the present exemplary embodiment, a relationship of 0≤tm<t is established.

It should be noted that, the correction unit 14 corrects a schedule so that the amount of power generation at each time of a changed power generation schedule does not fall below necessary output power after change.

According to the present exemplary embodiment described above, in a case where necessary output power in the first power generation unit with good output controllability changes, a new technique for correcting a power generation schedule in the first power generation unit is realized.

Specifically, according to the present exemplary embodiment, when change information indicating change details of necessary output power in the first power generation unit is acquired after a power generation schedule is generated, it is possible to ascertain free capacities of a plurality of storage batteries at the point in time and to correct the power generation schedule of the first power generation unit on the basis of the change information and the free capacities. For example, in a case where the free capacities of the storage batteries are sufficient, it is possible to achieve the stable supply of power by early increasing the output power of the first power generation unit. It should be noted that, in this case, a great amount of surplus power may be generated, but a storage battery having a sufficient free capacity can be charged with the surplus power, and thus it is possible to avoid inconvenience in which a great amount of surplus power is discarded.

In addition, according to the present exemplary embodiment, it is possible to determine "how early the output of the first power generation unit is increased" in accordance with the degree of free capacity of a storage battery. For example, the larger a free capacity is, the earlier the output of the first power generation unit can be increased. In this manner, it is possible to determine how early the output of the first power generation unit is increased, in accordance with a free capacity of a storage battery, and thus it is possible to reduce the occurrence of inconvenience in which the storage battery cannot be completely charged due to an excessively early increase in the output of the first power generation unit.

In addition, according to the present exemplary embodiment, the larger a free capacity of a storage battery is, the earlier a timing (time C of FIGS. 13 and 14) at which a power generation schedule is changed over to a corrected power generation schedule can be set to be. In this case, the amount of power generation of the first power generation unit may not be suddenly changed (a rate of change in the amount of power generation can be decreased), and thus it is possible to reduce a load on the first power generation unit (for example, thermal power generation).

### <Second Exemplary Embodiment>

A management device 10 according to the present exemplary embodiment is different from that in the first exemplary embodiment in that a request for promoting the charging of a storage battery 20 is output in a case where a power generation schedule is corrected so that output power is set to be equal to or greater than Pr1 a time t before a first timing. In a case where the power generation schedule is corrected so that the output power is set to be equal to or greater than Pr1 the time t before the first timing, a great amount of surplus power may be generated. Consequently, the management device 10 secures an area for performing charging with surplus power by outputting a request for promoting the charging of the storage battery 20 in accordance with the correction. As a result, even when surplus power is generated, it is possible to avoid inconvenience of having to discard the surplus power by charging the area (storage battery 20), which is secured in advance, with the surplus power.

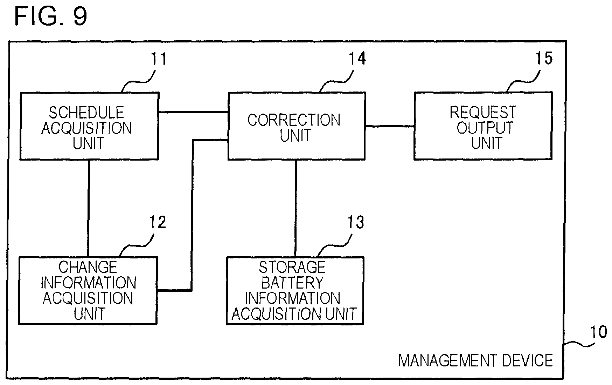

FIG. 9 illustrates an example of a functional block diagram of the management device 10 according to the present exemplary embodiment. As illustrated in the drawing, the management device 10 includes a schedule acquisition unit 11, a change information acquisition unit 12, a storage battery information acquisition unit 13, a correction unit 14, and a request output unit 15. Configurations of the schedule acquisition unit 11, the change information acquisition unit 12, the storage battery information acquisition unit 13, and the correction unit 14 are the same as those in the first exemplary embodiment, and thus a description thereof will not be repeated.

The request output unit 15 outputs a request for promoting the charging of the storage battery 20 in a case where the correction unit 14 corrects a power generation schedule so that output power is set to be equal to or greater than Pr1 the time t before a first timing.

The request may be transmitted to the storage battery 20, or may be transmitted to an address of a user who manages the storage battery 20. The user can ascertain details of the request by using any terminal.

The details of the request include a request for receiving power from a power system within at least a predetermined period of time (period of time in which it is considered that surplus power may be generated) to charge the storage battery 20 with the power. It should be noted that, the details may further include information indicating a reduction in a power rate and a rate after the reduction in a case where the storage battery 20 is charged with power within the period of time in accordance with the request. The promotion of charging of the storage battery 20 is expected by such an offer.

It should be noted that, in a case where the correction unit 14 corrects a power generation schedule so that output power is set to be equal to or greater than Pr1 a time tₘ before a first timing, the request output unit 15 may not output the request. In addition, in a case where the request output unit 15 adopts necessary output after change as a changed power generation schedule as it is as in the example illustrated in FIG. 12, the request output unit may not output the request.

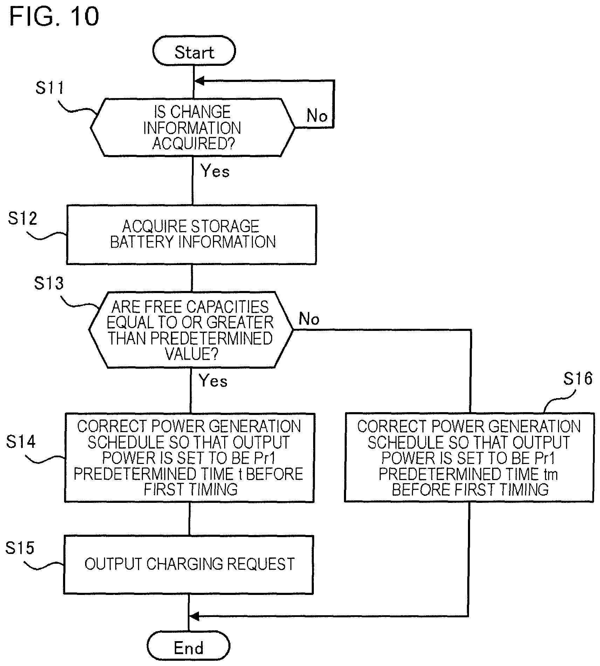

Here, an example of a flow of processing of the management device 10 according to the present exemplary embodiment will be described with reference to a flow chart of FIG. 10.

First, after the schedule acquisition unit 11 acquires a power generation schedule in a first power generation unit corresponding to a predetermined period of time, the change information acquisition unit 12 is set to be in a waiting state for the acquisition of change information indicating change details of necessary output power in the first power generation unit. The change information acquisition unit 12 is maintained in the waiting state while change information is not acquired (No in S11). On the other hand, when the change information acquisition unit 12 acquires change information (Yes in S11), the processing proceeds to S12.

It should be noted that, the management device 10 may acquire change information and then determine whether or not a relationship of (a rate of increase in necessary output power after change)≤(a maximum value of a rate of change in output) is established in any time slot. In a case where the relationship of (a rate of increase in necessary output power after change) ≤ (a maximum value of a rate of change in output) is established in any time slot, the processing does not proceed to S12. In addition, a changed power generation schedule adopting necessary power after change, which is specified by change information, as it is may be generated, and the processing may be terminated. The generation process is as described in the first exemplary embodiment with reference to FIG. 12, and thus a description thereof will not be repeated. In a case where the relationship of (a rate of increase in necessary output power after change)≤(a maximum value of a rate of change in output) is not established in any time slot, the processing may proceed to S12.

In S12, the storage battery information acquisition unit 13 acquires storage battery information indicating free capacities of a plurality of storage batteries 20. For example, the storage battery information acquisition unit 13 may acquire storage battery information in a case where Pr1 which is necessary output power at a first timing based on change information is greater than Pr0 which is output power at the first timing in a power generation schedule before change, that is, in a case where it is necessary to change the power generation schedule so as to increase the output power of the first power generation unit.

Thereafter, in a case where the free capacities of the plurality of storage batteries 20 which are specified on the basis of power storage information are equal to or greater than a predetermined value (Yes in S13), the correction unit 14 corrects the power generation schedule so that the output power is set to be equal to or greater than Pr1 a predetermined time t before the first timing (S14). Thereafter, the request output unit 15 outputs a request for promoting the charging of the storage battery 20 to a predetermined address (S13), and the processing is terminated. It should be noted that, after the request in S13 is transmitted, the management device 10 may receive from a user a response indicating compliance with the request. A user from whom the response is received may be registered as a target for a reduction in a power rate. The user can transmit a response to a request to the management device 10 by using any terminal.

On the other hand, in a case where the free capacities of the plurality of storage batteries 20 which are specified on the basis of power storage information are not equal to or greater than the predetermined value (No in S13), the correction unit 14 corrects the power generation schedule so that the output power is set to be equal to or greater than Pr1 a predetermined time tₘ (tₘ<t) before the first timing (S16). Then, the processing is terminated.

According to the present exemplary embodiment described above, it is possible to realize the same advantageous effects as those in the first exemplary embodiment. In addition, according to the present exemplary embodiment, in a case where a power generation schedule of the first power generation unit is corrected in a state where there is the possibility of a great amount of surplus power being generated, it is possible to output a request for promoting the charging of the storage battery 20. Thereby, it is possible to promote performing a process of charging the storage battery 20 with generated surplus power. In addition, it is expected to further promote the charging of the storage battery 20 by including an offer, such as a reduction in a power rate, in the request.

### <Third Exemplary Embodiment>

A management device 10 according to the present exemplary embodiment acquires a power generation schedule of a first power generation unit which is determined so as to satisfy a condition in which a total output power obtained by the first power generation unit and a second power generation unit does not fall below a predicted power consumption, on the basis of a power generation prediction indicating a predicted output power according to time of the second power generation unit and a consumption prediction indicating a predicted power consumption according to time. In a case where the management device 10 acquires at least one of a changed power generation prediction of the second power generation unit and a changed consumption prediction after the power generation schedule is generated, the management device generates change information (information indicating necessary output power after change according to time) so as to satisfy the condition on the basis of the acquired information. The management device 10 according to the present exemplary embodiment is different from those in the first and second exemplary embodiments in this respect.

An example of a functional block diagram of the management device 10 according to the present exemplary embodiment is illustrated in FIG. 2 or FIG. 9, similar to the first and second exemplary embodiments. Configurations of a schedule acquisition unit 11, a storage battery information acquisition unit 13, a correction unit 14, and a request output unit 15 are the same as those in the first and second exemplary embodiments.

In a case where a power generation schedule is generated on the basis of a power generation prediction of the second power generation unit and a consumption prediction and thereafter the change information acquisition unit 12 acquires at least one of a changed power generation prediction of the second power generation unit and a changed consumption prediction, the change information acquisition unit generates change information so as to satisfy the following condition on the basis of the acquired information.

Condition: A total output power obtained by the first power generation unit and the second power generation unit does not fall below a predicted power consumption.

It should be noted that, a power generation schedule of the first power generation unit which is acquired by the schedule acquisition unit 11 is determined so as to satisfy the condition.

A changed power generation prediction of the second power generation unit may be information indicating a power generation prediction according to time in a portion of a unit period (for example, one day or half a day) of a power generation schedule. In addition, a changed consumption prediction may be information indicating consumption prediction according to time in a portion of a unit period (for example, one day or half a day) of a power generation schedule.

There is a possibility that a power generation prediction and a consumption prediction are different from actual results. In addition, there is also a possibility that divergence between a prediction and an actual result is increased. In this manner, in a case where an actual result and a prediction are different from each other, there is a possibility that the state is maintained thereafter. Due to the accumulation of the divergence, there is also a possibility that a large expansion thereof occurs. Consequently, it is preferable to change the subsequent power generation prediction of the second power generation unit or consumption prediction on the basis of the degree of divergence at a certain point in time, and the like and to change a power generation schedule of the first power generation unit on the basis of the changed prediction. In addition, a situation in which the power generation prediction of the second power generation unit or consumption prediction diverges from an initial prediction may occur due to the occurrence of an event which has not been initially supposed. Also in this case, it is preferable to change the subsequent power generation prediction of the second power generation unit or consumption prediction at a point in time when the occurrence of the event is detected, and to change the power generation schedule of the first power generation unit on the basis of the changed prediction.

Consequently, in a case where a power generation schedule is generated on the basis of a power generation prediction of the second power generation unit and a consumption prediction and thereafter the change information acquisition unit 12 acquires at least one of a changed power generation prediction of the second power generation unit and a changed consumption prediction, the change information acquisition unit generates change information (information indicating necessary output power after change according to time) so as to satisfy the condition on the basis of the acquired information. The correction unit 14 corrects a power generation schedule of the first power generation unit on the basis of the generated change information.

According to the present exemplary embodiment described above, it is possible to realize the same advantageous effects as those in the first and second exemplary embodiments. In addition, according to the present exemplary embodiment, it is possible to appropriately correct a power generation schedule of the first power generation unit in accordance with a change in a power generation prediction or consumption prediction. As a result, it is possible to achieve the stable supply of power.

### <Fourth Exemplary Embodiment>

A management device 10 according to the present exemplary embodiment acquires changeability information indicating changeability of a power generation schedule of a first power generation unit. In a case where the possibility of changing the power generation schedule of the first power generation unit is higher than a predetermined level, the management device controls a plurality of storage batteries 20 so as to increase the free capacities thereof, during the period of the power generation schedule. The management device 10 according to the present exemplary embodiment is different from those in the first to third exemplary embodiments in this respect.

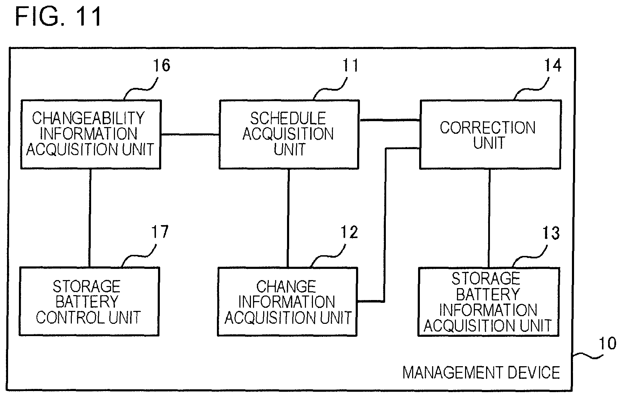

FIG. 11 illustrates an example of a functional block diagram of the management device 10 according to the present exemplary embodiment. As illustrated in the drawing, the management device 10 includes a schedule acquisition unit 11, a change information acquisition unit 12, a storage battery information acquisition unit 13, a correction unit 14, a changeability information acquisition unit 16, and a storage battery control unit 17. The management device 10 according to the present exemplary embodiment may further include a request output unit 15. Configurations of the schedule acquisition unit 11, the change information acquisition unit 12, the storage battery information acquisition unit 13, the correction unit 14, and the request output unit 15 are the same as those in the first to third exemplary embodiments, and thus a description thereof will not be repeated.

The changeability information acquisition unit 16 acquires changeability information indicating changeability of a power generation schedule of a first power generation unit. For example, a user who manages the power generation schedule of the first power generation unit may examine the accuracy of a power generation prediction of a second power generation unit or a consumption prediction on the basis of a weather forecast of the day, an event of the day, or the like, and may determine the changeability of the power generation schedule on the basis of an examination result. The determined changeability may be input to the changeability information acquisition unit 16. The changeability may be expressed by, for example, a percentage, or may be expressed by 5-stage evaluation, or the like.

The storage battery control unit 17 determines whether or not changeability is greater than a predetermined value, on the basis of the changeability information acquired by the changeability information acquisition unit 16. In a case where the changeability is greater than the predetermined value, that is, in a case where the possibility of changing a power generation schedule is higher than a predetermined level, the storage battery control unit 17 controls the plurality of storage batteries 20 so as to increase the free capacities thereof, during the period of the power generation schedule. A control method is not particularly limited, and an example thereof will be described below.

For example, the storage battery control unit 17 may transmit an upper limit of a state of charge (SOC) for permitting charging during the period of the power generation schedule to the plurality of storage batteries 20 at a predetermined timing. In this case, each of the storage batteries 20 controls itself so as not to perform charging in excess of the determined upper limit of the SOC during the period of the power generation schedule. For example, when the SOC reaches the upper limit during power charging, the storage batteries 20 stop the charging.

It should be noted that, the storage battery control unit 17 may determine an upper limit of an SOC for permitting charging in accordance with the value of changeability. For example, the higher changeability is, the lower the storage battery control unit 17 determines an upper limit of an SOC to be.

According to the present exemplary embodiment described above, it is possible to realize the same advantageous effects as those in the first to third exemplary embodiment. In addition, according to the present exemplary embodiment, in a case where the possibility of changing a power generation schedule of the first power generation unit is higher than a predetermined level, it is possible to secure a great amount of free capacity by controlling the storage batteries 20 so as to increase the free capacities thereof. Thus, in a case where a situation of changing the power generation schedule of the first power generation unit occurs, it is possible to achieve the stable supply of power by increasing an output of the first power generation unit earlier. It should be noted that, in a case where a great amount of surplus power is generated due to the situation, the charging of the storage batteries 20 that secure free capacities in advance can be performed, and thus it is possible to effectively avoid inconvenience in which a great amount of surplus power is discarded.

Hereinafter, an example of a reference configuration will be appended.
1. A management device including:
   a schedule acquisition unit that acquires a power generation schedule in a first power generation unit which shows output power according to time;
   a change information acquisition unit that acquires change information indicating change details of necessary output power in the first power generation unit;
   a storage battery information acquisition unit that acquires storage battery information indicating free capacities of a plurality of storage batteries when the change information acquisition unit acquires the change information; and
   a correction unit that corrects the power generation schedule on the basis of the change information and the storage battery information.
2. The management device according to 1,
   wherein the correction unit determines a timing at which the power generation schedule is changed over to the corrected power generation schedule in accordance with the free capacities of the plurality of storage batteries.
3. The management device according to 2,
   wherein the larger the free capacities of the plurality of storage batteries are, the earlier the correction unit sets the timing at which the power generation schedule is changed over to the corrected power generation schedule to be.
4. The management device according to any one of 1 to 3,
   wherein the correction unit corrects the power generation schedule, in a case where Pr1, which is the necessary output power at a first timing based on the change information, is greater than Pr0 which is output power at the first timing in the power generation schedule before change and the free capacities of the plurality of storage batteries based on the storage battery information are equal to or greater than a predetermined value, so that output power is set to be equal to or greater than Pr1 a predetermined time t before the first timing.
5. The management device according to 4,
   wherein the correction unit determines the predetermined time t in accordance with the free capacities of the plurality of storage batteries.
6. The management device according to 5,
   wherein the larger the free capacities of the plurality of storage batteries are, the longer the correction unit sets the predetermined time t to be.
7. The management device according to any one of 4 to 6,
   wherein the correction unit corrects the power generation schedule so that output power is set to be equal to or greater than Pr1 a predetermined time tₘ (0≤tₘ<t) before the first timing in a case where Pr1 is greater than Pr0 and the free capacities of the plurality of storage batteries based on the storage battery information are smaller than the predetermined value.
8. The management device according to any one of 4 to 7, further including:
   a request output unit that outputs a request for promoting charging of the storage battery in a case where the correction unit corrects the power generation schedule so that output power is set to be equal to or greater than Pr1 the predetermined time t before the first timing.
9. The management device according to 8 dependent on 7,
   wherein the request output unit does not output the request in a case where the correction unit corrects the power generation schedule so that output power is set to be equal to or greater than Pr1 the predetermined time tₘ before the first timing.
10. The management device according to any one of 1 to 9,
   wherein the power generation schedule of the first power generation unit is determined so as to satisfy a condition in which a total output power obtained by the first power generation unit and a second power generation unit, which is different from the first power generation unit, does not fall below the predicted power consumption, on the basis of a power generation prediction indicating a predicted output power according to time of the second power generation unit and a consumption prediction indicating a predicted power consumption according to time, and
   wherein in a case where the power generation schedule is generated on the basis of the power generation prediction and the consumption prediction and thereafter at least one of the power generation prediction having been changed and the consumption prediction having been changed is acquired, the change information acquisition unit generates the change information so as to satisfy the condition on the basis of the acquired information.
11. The management device according to any one of 1 to 10, further including:
   a changeability information acquisition unit that acquires changeability information indicating changeability of the power generation schedule of the first power generation unit; and
   a storage battery control unit that controls the storage battery so as to increase a free capacity thereof, during a period of the power generation schedule in a case where the changeability is greater than a predetermined value.
12. The management device according to any one of 1 to 11,
   wherein the first power generation unit and the storage battery are electrically connected to each other through a system, and
   wherein output power of the first power generation unit is supplied to the storage battery.
13. A management method performed by a computer, the method including:
   a schedule acquisition step of acquiring a power generation schedule in a first power generation unit which shows output power according to time;
   a change information acquisition step of acquiring change information indicating change details of necessary output power in the first power generation unit;
   a storage battery information acquisition step of acquiring storage battery information indicating free capacities of a plurality of storage batteries in a case where the change information is acquired by the change information acquisition step; and
   a correction step of correcting the power generation schedule on the basis of the change information and the storage battery information.
13-2. The management method according to 13,
   wherein in the correction step, a timing at which the power generation schedule is changed over to the corrected power generation schedule is determined in accordance with the free capacities of the plurality of storage batteries.
13-3. The management method according to 13-2,
   wherein in the correction step, the larger the free capacities of the plurality of storage batteries are, the earlier the timing at which the power generation schedule is changed over to the corrected power generation schedule is set to be.
13-4. The management method according to any one of 13 to 13-3,
   wherein in the correction step, the power generation schedule is corrected, in a case where Pr1, which is the necessary output power at a first timing based on the change information, is greater than Pr0 which is output power at the first timing in the power generation schedule before change and the free capacities of the plurality of storage batteries based on the storage battery information are equal to or greater than a predetermined value, so that output power is set to be equal to or greater than Pr1 a predetermined time t before the first timing.
13-5. The management method according to 13-4,
   wherein in the correction step, the predetermined time t is determined in accordance with the free capacities of the plurality of storage batteries.
13-6. The management method according to 13-5,
   wherein in the correction step, the larger the free capacities of the plurality of storage batteries are, the longer the predetermined time t is set to be.
13-7. The management method according to any one of 13-4 to 13-6,
   wherein in the correction step, the power generation schedule is corrected so that output power is set to be equal to or greater than Pr1 a predetermined time tₘ (0≤tₘ<t) before the first timing in a case where Pr1 is greater than Pr0 and the free capacities of the plurality of storage batteries based on the storage battery information are smaller than the predetermined value.
13-8. The management method performed by the computer according to any one of 13-4 to 13-7, the method further including:
   a request output step of outputting a request for promoting charging of the storage battery in a case where the power generation schedule is corrected so that output power is set to be equal to or greater than Pr1 the predetermined time t before the first timing in the correction step.
13-9. The management method according to 13-8 dependent on 13-7,
   wherein in the request output step, the request is not output in a case where the power generation schedule is corrected so that output power is set to be equal to or greater than Pr1 the predetermined time tₘ before the first timing in the correction step.
13-10. The management method according to any one of 13 to 13-9,
   wherein the power generation schedule of the first power generation unit is determined so as to satisfy a condition in which a total output power obtained by the first power generation unit and a second power generation unit, which is different from the first power generation unit, does not fall below the predicted power consumption, on the basis of a power generation prediction indicating a predicted output power according to time of the second power generation unit and a consumption prediction indicating a predicted power consumption according to time, and
   wherein in a case where the power generation schedule is generated on the basis of the power generation prediction and the consumption prediction and thereafter at least one of the power generation prediction having been changed and the consumption prediction having been changed is acquired, the change information is generated so as to satisfy the condition on the basis of the acquired information in the change information acquisition step.
13-11. The management method performed by the computer according to any one of 13 to 13-10, the method further including:
   a changeability information acquisition step of acquiring changeability information indicating changeability of the power generation schedule of the first power generation unit; and
   a storage battery control step of controlling the storage battery so as to increase a free capacity thereof, during a period of the power generation schedule in a case where the changeability is greater than a predetermined value.
13-12. The management method according to any one of 13 to 13-11,
   wherein the first power generation unit and the storage battery are electrically connected to each other through a system, and
   wherein output power of the first power generation unit is supplied to the storage battery.
14. A program causing a computer to function as:
   a schedule acquisition unit that acquires a power generation schedule in a first power generation unit which shows output power according to time;
   a change information acquisition unit that acquires change information indicating change details of necessary output power in the first power generation unit;
   a storage battery information acquisition unit that acquires storage battery information indicating free capacities of a plurality of storage batteries when the change information acquisition unit acquires the change information; and
   a correction unit that corrects the power generation schedule on the basis of the change information and the storage battery information.
14-2. The program according to 14,
   wherein the correction unit determines a timing at which the power generation schedule is changed over to the corrected power generation schedule in accordance with the free capacities of the plurality of storage batteries.
14-3. The program according to 14-2,
   wherein the larger the free capacities of the plurality of storage batteries are, the earlier the correction unit sets the timing at which the power generation schedule is changed over to the corrected power generation schedule to be.
14-4. The program according to any one of 14 to 14-3,
   wherein the correction unit corrects the power generation schedule so that output power is set to be equal to or greater than Pr1 a predetermined time t before a first timing in a case where Pr1, which is the necessary output power at the first timing based on the change information, is greater than Pr0 which is output power at the first timing in the power generation schedule before change and the free capacities of the plurality of storage batteries based on the storage battery information are equal to or greater than a predetermined value.
14-5. The program according to 14-4,
   wherein the correction unit determines the predetermined time t in accordance with the free capacities of the plurality of storage batteries.
14-6. The program according to 14-5,
   wherein the larger the free capacities of the plurality of storage batteries are, the longer the correction unit sets the predetermined time t to be.
14-7. The program according to any one of 14-4 to 14-6,
   wherein the correction unit corrects the power generation schedule so that output power is set to be equal to or greater than Pr1 a predetermined time tₘ (0≤tₘ<t) before the first timing in a case where Pr1 is greater than Pr0 and the free capacities of the plurality of storage batteries based on the storage battery information are smaller than the predetermined value.
14-8. The program according to any one of 14-4 to 14-7, causing the computer to further function as:
   a request output unit that outputs a request for promoting charging of the storage battery in a case where the correction unit corrects the power generation schedule so that output power is set to be equal to or greater than Pr1 the predetermined time t before the first timing.
14-9. The program according to 14-8 dependent on 14-7,
   wherein the request output unit does not output the request in a case where the correction unit corrects the power generation schedule so that output power is set to be equal to or greater than Pr1 the predetermined time tₘ before the first timing.
14-10. The program according to any one of 14 to 14-9,
   wherein the power generation schedule of the first power generation unit is determined so as to satisfy a condition in which a total output power obtained by the first power generation unit and a second power generation unit, which is different from the first power generation unit, does not fall below the predicted power consumption, on the basis of a power generation prediction indicating a predicted output power according to time of the second power generation unit and a consumption prediction indicating a predicted power consumption according to time, and
   wherein in a case where the power generation schedule is generated on the basis of the power generation prediction and the consumption prediction and thereafter at least one of the power generation prediction having been changed and the consumption prediction having been changed is acquired, the change information acquisition unit generates the change information so as to satisfy the condition on the basis of the acquired information.
14-11. The program according to any one of 14 to 14-10, causing the computer to further function as:
   a changeability information acquisition unit that acquires changeability information indicating changeability of the power generation schedule of the first power generation unit; and
   a storage battery control unit that controls the storage battery so as to increase a free capacity thereof, during a period of the power generation schedule in a case where the changeability is greater than a predetermined value.
14-12. The program according to any one of 14 to 14-11,
   wherein the first power generation unit and the storage battery are electrically connected to each other through a system, and
   wherein output power of the first power generation unit is supplied to the storage battery.

The application is based on Japanese Patent Application No. 2014-169100 filed on August 22, 2014, the content of which is incorporated herein by reference.

## Claims

1. A management device comprising:
a schedule acquisition unit that acquires a power generation schedule in a first power generation unit which shows output power according to time;
a change information acquisition unit that acquires change information indicating change contents of necessary output power in the first power generation unit;
a storage battery information acquisition unit that acquires storage battery information indicating free capacities of a plurality of storage batteries when the change information acquisition unit acquires the change information; and
a correction unit that corrects the power generation schedule on the basis of the change information and the storage battery information.

2. The management device according to claim 1,
wherein the correction unit determines a timing at which the power generation schedule is changed over to the corrected power generation schedule in accordance with the free capacities of the plurality of storage batteries.

3. The management device according to claim 2,
wherein the larger the free capacities of the plurality of storage batteries are, the earlier the correction unit sets the timing at which the power generation schedule is changed over to the corrected power generation schedule to be.

4. The management device according to any one of claims 1 to 3,
wherein the correction unit corrects the power generation schedule, in a case where Pr1, which is the necessary output power at a first timing based on the change information, is greater than Pr0 which is output power at the first timing in the power generation schedule before change and the free capacities of the plurality of storage batteries based on the storage battery information are equal to or greater than a predetermined value, so that output power is set to be equal to or greater than Pr1 a predetermined time t before the first timing.

5. The management device according to claim 4,
wherein the correction unit determines the predetermined time t in accordance with the free capacities of the plurality of storage batteries.

6. The management device according to claim 5,
wherein the larger the free capacities of the plurality of storage batteries are, the longer the correction unit sets the predetermined time t to be.

7. The management device according to any one of claims 4 to 6,
wherein the correction unit corrects the power generation schedule so that output power is set to be equal to or greater than Pr1 a predetermined time tₘ (0≤tₘ<t) before the first timing in a case where Pr1 is greater than Pr0 and the free capacities of the plurality of storage batteries based on the storage battery information are smaller than the predetermined value.

8. The management device according to any one of claims 4 to 7, further comprising:
a request output unit that outputs a request for promoting charging of the storage battery in a case where the correction unit corrects the power generation schedule so that output power is set to be equal to or greater than Pr1 the predetermined time t before the first timing.

9. The management device according to claim 8 dependent on claim 7,
wherein the request output unit does not output the request in a case where the correction unit corrects the power generation schedule so that output power is set to be equal to or greater than Pr1 the predetermined time tₘ before the first timing.

10. The management device according to any one of claims 1 to 9,
wherein the power generation schedule of the first power generation unit is determined so as to satisfy a condition in which a total output power obtained by the first power generation unit and a second power generation unit, which is different from the first power generation unit, does not fall below the predicted power consumption, on the basis of a power generation prediction indicating a predicted output power according to time of the second power generation unit and a consumption prediction indicating a predicted power consumption according to time, and
wherein in a case where the power generation schedule is generated on the basis of the power generation prediction and the consumption prediction and thereafter at least one of the power generation prediction having been changed and the consumption prediction having been changed is acquired, the change information acquisition unit generates the change information so as to satisfy the condition on the basis of the acquired information.

11. The management device according to any one of claims 1 to 10, further comprising:
a changeability information acquisition unit that acquires changeability information indicating changeability of the power generation schedule of the first power generation unit; and
a storage battery control unit that controls the storage battery so as to increase a free capacity thereof, during a period of the power generation schedule in a case where the changeability is greater than a predetermined value.

12. The management device according to any one of claims 1 to 11,
wherein the first power generation unit and the storage battery are electrically connected to each other through a system, and
wherein output power of the first power generation unit is supplied to the storage battery.

13. A management method performed by a computer, the method comprising:
a schedule acquisition step of acquiring a power generation schedule in a first power generation unit which shows output power according to time;
a change information acquisition step of acquiring change information indicating change details of necessary output power in the first power generation unit;
a storage battery information acquisition step of acquiring storage battery information indicating free capacities of a plurality of storage batteries in a case where the change information is acquired by the change information acquisition step; and
a correction step of correcting the power generation schedule on the basis of the change information and the storage battery information.

14. A program causing a computer to function as:
a schedule acquisition unit that acquires a power generation schedule in a first power generation unit which shows output power according to time;
a change information acquisition unit that acquires change information indicating change details of necessary output power in the first power generation unit;
a storage battery information acquisition unit that acquires storage battery information indicating free capacities of a plurality of storage batteries when the change information acquisition unit acquires the change information; and
a correction unit that corrects the power generation schedule on the basis of the change information and the storage battery information.
